# EUROPÄISCHE PATENTSCHRIFT

(11) **EP 2 997 285 B1**
(45) Veröffentlichungstag und Bekanntmachung des Hinweises auf die Patenterteilung: **30.12.2020**
(21) Anmeldenummer: 14704067.9
(22) Anmeldetag: 09.01.2014
(51) Int. Cl.: F16H 3/72, H02K 7/20, H02K 7/116, H02P 9/06

(54) **VERFAHREN UND VORRICHTUNG ZUM ANFAHREN EINES TRIEBSTRANGES**
METHOD AND DEVICE FOR STARTING A DRIVE TRAIN
PROCÉDÉ ET DISPOSITIF PERMETTANT DE METTRE EN MARCHE UNE CHAÎNE D'ENTRAÎNEMENT ET DE TRANSMISSION

(30) Priorität: 17.05.2013 AT 4172013
(43) Veröffentlichungstag der Anmeldung: 23.03.2016
(73) Patentinhaber: SET Sustainable Energy Technologies GmbH, 9020 Klagenfurt am Wörthersee (AT)
(72) Erfinder: ERJAVEC, Miha, 2390 Ravne na Koroskem (SI); WALDNER, Markus, A-9020 Klagenfurt (AT); HEHENBERGER, Gerald, A-9020 Klagenfurt (AT)
(74) Vertreter: Beer & Partner Patentanwälte KG
(86) Internationale Anmeldenummer: PCT/AT2014/000002
(87) Internationale Veröffentlichungsnummer: WO 2014/183139

(56) Entgegenhaltungen:
- WO-A1-2010/101467
- DE-A1- 19 751 231
- DE-U1-202012 101 708
- US-A- 5 258 651

## Beschreibung

Die Erfindung betrifft ein Verfahren zum Anfahren eines Triebstranges mit einer Antriebswelle, einer Antriebsmaschine und mit einem Differenzialgetriebe mit drei An- bzw. Abtrieben, wobei ein Abtrieb mit der Antriebswelle, ein erster Antrieb mit der Antriebsmaschine und ein zweiter Antrieb mit einem Differenzialantrieb verbunden ist.

Derartige Verfahren sind aus der WO 2010/101467 A und der US 5 258 651 A bekannt.

Ein allgemeines Problem von Arbeitsmaschinen, wie Fördereinrichtungen, z.B. Pumpen, Kompressoren und Ventilatoren, oder wie Mühlen, Brecher, Fahrzeuge usw., ist ein effizienter drehzahlvariabler Betrieb, bzw. das Anfahren unter hoher Last, da z.B. elektrische Maschinen, aber auch Verbrennungskraftmaschinen meist ein geringeres Anfahrmoment als ihr Auslegungsdrehmoment haben. Im Weiteren werden elektrische Maschinen als Beispiel für Antriebsmaschinen herangezogen, das Prinzip gilt aber für alle möglichen Arten von Antriebsmaschinen so wie z.B. für Verbrennungskraftmaschinen.

Die am häufigsten verwendeten elektrischen Antriebe sind heutzutage Drehstrommaschinen wie z.B. Asynchronmotoren und Synchronmotoren. Trotz hoher elektrischer Leistungsaufnahme sind Drehstrommaschinen bei Stillstand nicht im Stande, diese Leistung vollständig mechanisch abzugeben, was sich in hohen Verlusten und einem geringen Anfahrmoment wiederspiegelt. Gleichzeitig entspricht die Stromaufnahme einer Drehstrommaschine beim Start von Drehzahl Null aus typischerweise dem etwa 7-fachen Nennstrom, was beim Anfahren eine entsprechend hohe elektrische Last für das Netz verursacht.

Es muss daher eine Drehstrommaschine entsprechend groß ausgelegt werden, damit sie vom Stillstand an ein dem Nenndrehmoment entsprechendes Antriebsmoment liefern kann, und ist deswegen oft überdimensioniert. Elektrische Maschinen werden daher auch aus diesem Grund, anstatt direkt an ein Netz angeschlossen zu werden, häufig in Kombination mit einem Frequenzumrichter als drehzahlvariabler Antrieb ausgeführt. Damit kann man zwar ein Anfahren mit hohem Drehmoment von Drehzahl Null realisieren ohne das Netz zu belasten, die Lösung ist jedoch teuer und mit wesentlichen Wirkungsgradeinbußen verbunden. Eine im Vergleich dazu kostengünstigere und auch bezüglich Wirkungsgrad bessere Alternative ist der Einsatz von Differenzialsystemen - beispielsweise gemäß AT 507394 A. Grundsätzliche Einschränkung hierbei ist jedoch, dass abhängig vom Übersetzungsverhältnis der Differenzialstufe nur ein relativ kleiner Drehzahlbereich bzw. im sogenannten Differenzialmodus praktisch keine niedrigen Drehzahlen an der Antriebswelle einer Arbeitsmaschine erreicht werden können.

Um dies zu realisieren gibt es verschiedene Möglichkeiten. Gemäß deutschem Gebrauchsmuster DE 20 2012 101 708 U beispielsweise kann man das Übersetzungsverhältnis des Differenzialgetriebes auf 1 festlegen. Auf dieser Basis kann man mit dem Differenzialantrieb den kompletten Triebstrang antreiben bzw. die Antriebsmaschine auf Synchrondrehzahl bringen und diese in weiterer Folge mit dem Netz synchronisieren.

Nachteil dieser Lösung ist, dass der Differenzialantrieb bzw. dessen Frequenzumrichter wesentlich kleiner dimensioniert ist als die Antriebsmaschine und daher auch nur ein entsprechend kleines Drehmoment liefern kann.

Aufgabe der Erfindung ist es daher, eine Lösung zu finden, mit der man Antriebsmaschinen unter Last entweder mit dem Netz synchronisieren (wie z.B. direkt an das Netz gekoppelte elektrische Maschinen) oder in einen Drehzahlbereich mit hohem zur Verfügung stehenden Drehmoment (wie z.B. bei Verbrennungskraftmaschinen) beschleunigen und zusätzlich die Arbeitsmaschine mit optimalem Auslegungs-Drehmoment des Triebstranges von Drehzahl Null weg anfahren kann.

Gelöst wir diese Aufgabe mit einem Verfahren mit den Merkmalen von Anspruch 1.

Der Kern eines Differenzialsystems ist ein Differenzialgetriebe, das in einer einfachen Ausführung eine einfache Planetengetriebestufe mit drei An- bzw. Abtrieben sein kann, wobei ein Abtrieb mit der Antriebswelle einer Arbeitsmaschine, ein erster Antrieb mit der Antriebsmaschine und ein zweiter Antrieb mit einem Differenzialantrieb verbunden ist. Damit kann die Arbeitsmaschine bei konstanter Drehzahl der Antriebsmaschine drehzahlvariabel betrieben werden, indem der Differenzialantrieb die Drehzahldifferenz ausgleicht.

Um eine Antriebsmaschine vom Stillstand aus vorzugsweise auf Synchrondrehzahl zu bringen und zusätzlich eine Arbeitsmaschine mit hohem Drehmoment von Drehzahl Null anzufahren, kann das Anlaufen erfindungsgemäß z.B. wie folgt in 3 Phasen stattfinden:
Phase 1: Die Antriebsmaschine wird vorzugsweise mit sogenannter Stern/Dreieck-Schaltung ans Netz geschaltet oder alternativ (in einer besonders netzschonenden Methode) zuerst mit einer zusätzlichen Einrichtung auf (zumindest näherungsweise) Synchrondrehzahl gebracht und dann mit dem Netz synchronisiert. Im Falle einer Verbrennungskraftmaschine wird diese einfach gestartet und anschließend hochgefahren. Dabei bleibt die Antriebsmaschine während des Anfahrens, abgesehen von den zu überwindenden massenträgheitsmomentbedingten Reaktionskräften vom zweiten Antrieb des Differenzialgetriebes, weitgehend frei von äußeren mechanischen Lasten. Im Umkehrschluss bedeutet dies, dass, bis die Antriebsmaschine ihre Nenndrehzahl erreicht hat, auf die Antriebswelle der Arbeitsmaschine ein entsprechend kleines antreibendes Drehmoment wirkt.
Phase 2: Da jetzt das volle Drehmoment der Antriebsmaschine zur Verfügung steht, beginnt in der zweiten Phase das eigentliche Beschleunigen und Anfahren der Arbeitsmaschine unter Last, indem der zweite Antrieb der Differenzialgetriebestufe mittels einer Synchronisationsbremse verzögert wird.
Phase 3: Sobald die Antriebswelle des zweiten Antriebs des Differenzialsystems im Regeldrehzahlbereich des Differenzialantriebs ist, übernimmt dieser die Drehzahlregelung des Triebstrangs und die Synchronisationsbremse wird gelöst.

Bevorzugte Ausführungsformen der Erfindung sind Gegenstand der Unteransprüche.

Nachfolgend werden bevorzugte Ausführungsformen der Erfindung mit Bezug auf die angeschlossenen Zeichnungen erläutert. Es zeigt:
- Fig. 1: das Prinzip eines erfindungsgemäßen Differenzialsystems für einen Antrieb einer Pumpe,
- Fig. 2: eine weitere erfindungsgemäße Ausführungsform eines Differenzialsystems,
- Fig. 3: eine weitere erfindungsgemäße Ausführungsform eines Differenzialsystems mit einer Getriebevorstufe,
- Fig. 4: die Drehzahl- und Leistungsparameter eines Differenzialsystems einer Pumpe,
- Fig. 5: eine weitere erfindungsgemäße Ausführungsform eines Differenzialsystems mit einem vereinfachten Differenzialantrieb,
- Fig. 6: die sich aus Fig. 5 ergebenden Drehzahl- und Leistungsparameter,
- Fig. 7: eine weitere erfindungsgemäße Ausführungsform eines Differenzialsystems mit einer Getriebeschaltstufe,
- Fig. 8: die sich aus Fig. 7 ergebenden Drehzahl- und Leistungsparameter,
- Fig. 9: eine weitere erfindungsgemäße Ausführungsform eines Differenzialsystems mit reduziertem Drehzahlbereich,
- Fig. 10: die sich aus Fig. 9 ergebenden Drehzahl- und Leistungsparameter,
- Fig. 11: die sich aus Fig. 9 ergebenden möglichen Drehzahl- und Leistungsparameter für eine sogenannte Pumpturbine,
- Fig. 12: eine weitere erfindungsgemäße Ausführungsform eines Differenzialsystems für eine Verbrennungskraftmaschine als Antriebsmaschine und
- Fig. 13: ein Regelsystem zum Dämpfen von Triebstrangschwingungen.

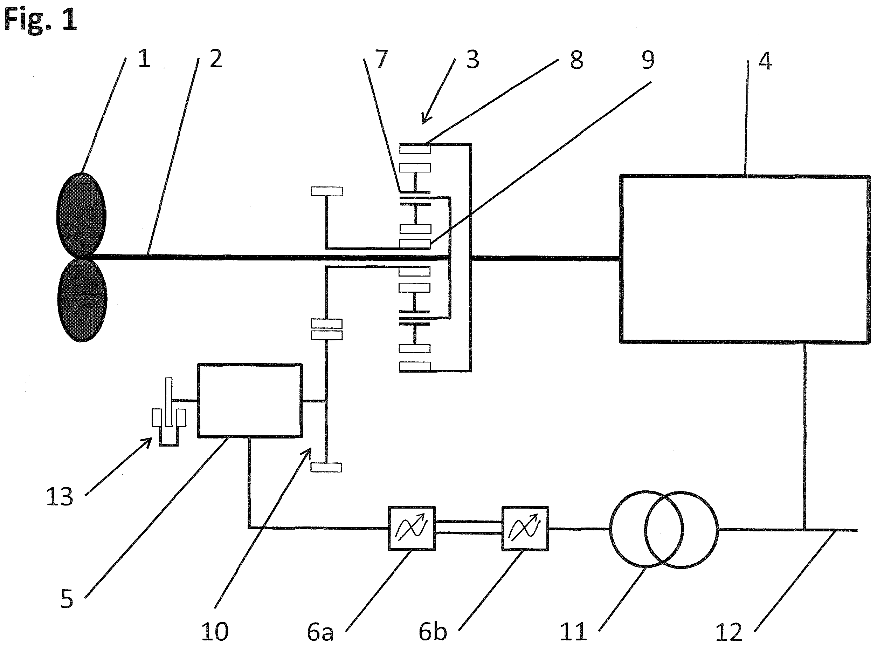

Fig. 1 zeigt das Prinzip eines Differenzialsystems für einen Triebstrang am Beispiel einer Pumpe. Dabei ist die Arbeitsmaschine 1 der Rotor einer Pumpe, welcher über eine Antriebswelle 2 und ein Differenzialgetriebe 3 von einer Antriebsmaschine 4 angetrieben wird. Die Antriebsmaschine 4 ist vorzugsweise eine Mittelspannungs-Drehstrommaschine, welche an ein Netz 12, welches im gezeigten Beispiel aufgrund einer Mittelspannungs-Drehstrommaschine ein Mittelspannungsnetz ist, angeschlossen wird. Das gewählte Spannungsniveau hängt jedoch vom Einsatzfall und vor allem dem Leistungsniveau der Antriebsmaschine 4 ab und kann ohne Einfluss auf die Grundfunktion des erfindungsgemäßen Systems jedes gewünschte Spannungsniveau haben. Entsprechend der Polpaarzahl der Antriebsmaschine 4 ergibt sich ein bauartspezifischer Betriebsdrehzahlbereich. Der Betriebsdrehzahlbereich ist dabei jener Drehzahlbereich, in dem die Antriebsmaschine 4 ein definiertes bzw. gewünschtes bzw. erforderliches Drehmoment liefern bzw. im Falle einer elektrischen Antriebsmaschine mit dem Netz 12 synchronisiert werden kann. Ein Planetenträger 7 ist mit der Antriebswelle 2 verbunden, die Antriebsmaschine 4 mit einem Hohlrad 8 und ein Sonnenrad 9 des Differenzialgetriebes 3 mit einem Differenzialantrieb 5. Der Kern des Differenzialsystems ist in dieser Ausführungsform somit eine einfache Planetengetriebestufe mit drei An- bzw. Abtrieben, wobei ein Abtrieb mit der Antriebswelle 2 der Arbeitsmaschine 1, ein erster Antrieb mit der Antriebsmaschine 4 und ein zweiter Antrieb mit dem Differenzialantrieb 5 verbunden ist.

Um den Drehzahlbereich des Differenzialantriebs 5 optimal anpassen zu können, wird ein Anpassungsgetriebe 10 zwischen dem Sonnenrad 9 und dem Differenzialantrieb 5 implementiert. Alternativ zur gezeigten Stirnradstufe kann das Anpassungsgetriebe 10 beispielsweise auch mehrstufig sein bzw. als Zahnriemen oder Kettentrieb ausgeführt und/oder mit einer Planetengetriebestufe kombiniert werden. Mit dem Anpassungsgetriebe 10 kann man darüber hinaus einen Achsversatz für den Differenzialantrieb 5 realisieren, der aufgrund der koaxialen Anordnung der Arbeitsmaschine 1 und der Antriebsmaschine 4 eine einfache Ausführung des Differenzialantriebes 5 ermöglicht. Mit dem Differenzialantrieb 5 ist eine Motorbremse 13 verbunden, welche den Differenzialantrieb 5 bei Bedarf bremst. Elektrisch ist der Differenzialantrieb 5 mittels vorzugsweise eines Niederspannungs-Frequenzumrichters, bestehend aus einem motorseitigen Wechselrichter 6a und einem netzseitigen Wechselrichter 6b, und einem Transformator 11 an das Netz 12 angebunden. Der Transformator gleicht allfällige vorhandene Spannungsdifferenzen zwischen dem Netz 12 und dem netzseitigen Wechselrichter 6b aus und kann bei Spannungsgleichheit zwischen der Antriebsmaschine 4, dem netzseitigen Wechselrichter 6b und dem Netz 12 entfallen. Die Wechselrichter 6a und 6b sind durch einen Gleichstromzwischenkreis verbunden und können bei Bedarf örtlich getrennt sein, wobei vorzugsweise der motorseitige Wechselrichter 6a so nah wie möglich beim Differenzialantrieb 5 positioniert ist. Wesentlicher Vorteil dieses Konzeptes ist, dass die Antriebsmaschine 4 direkt, das heißt ohne aufwändige Leistungselektronik, an ein Netz 12 angebunden werden kann. Der Ausgleich zwischen variabler Rotordrehzahl und fixer Drehzahl der netzgebundenen Antriebsmaschine 4 wird durch den drehzahlvariablen Differenzialantrieb 5 realisiert.

Die Drehmomentgleichung für das Differenzialsystem lautet: ${Drehmoment}_{Differenzialantrieb} = {Drehmoment}_{Atriebswelle} * y / x ,$ wobei der Größenfaktor y/x ein Maß für die Übersetzungsverhältnisse im Differenzialgetriebe 3 und im Anpassungsgetriebe 10 ist. Die Leistung des Differenzialantriebs 5 ist im Wesentlichen proportional dem Produkt aus prozentueller Abweichung der Pumpendrehzahl von deren Grunddrehzahl x Antriebswellenleistung. Dementsprechend erfordert ein großer Drehzahlbereich grundsätzlich eine entsprechend große Dimensionierung des Differenzialantriebs 5. Darin ist auch der Grund zu sehen, warum Differenzialsysteme für kleine Drehzahlbereiche besonders gut geeignet sind, wobei aber grundsätzlich jeder Drehzahlbereich realisierbar ist.

Ein Differenzialantrieb 5 für eine Pumpe als Arbeitsmaschine 1 hat beispielsweise eine Leistung von rund 15% der System-Gesamtleistung. Das wiederum bedeutet, dass mit dem Differenzialsystem keine niedrigen Drehzahlen an der Arbeitsmaschine 1 realisiert werden können. Muss die Arbeitsmaschine 1 von Drehzahl Null mit hohem Drehmoment in ihren Arbeitsdrehzahlbereich (dies ist der Drehzahlbereich, in dem die Arbeitsmaschine 1 im Wesentlichen arbeitet) gebracht werden, so kann dies nur realisiert werden, indem der Differenzialantrieb 5 eingebremst (entweder elektrisch oder mittels Motorbremse 13) und die Antriebsmaschine 4 an das Netz geschaltet wird. Die Antriebsmaschine 4 wiederum kann aus dem Stand das Nenndrehmoment nur schwer aufbringen, bzw. zieht sie einen bis zu 7-fachen Nennstrom, um annähernd auf Synchrondrehzahl zu beschleunigen. Durch Einsatz einer sogenannten Stern/Dreieck-Schaltung kann man zwar den Anfahrstrom reduzieren, reduziert damit jedoch auch das realisierbare Anfahrmoment.

Eine erfindungsgemäße Verbesserung erzielt man z. B., indem der Differenzialantrieb 5 zu Beginn des Anfahrens auf seine maximal mögliche Betriebsdrehzahl gebracht wird. Aufgrund äußerer Lasten verbleibt währenddessen die Arbeitsmaschine 1 in einem Bereich kleiner Drehzahl. Dadurch wird die Antriebsmaschine 4 auf eine Drehzahl gebracht, welche sich abhängig von der Drehzahl der Arbeitsmaschine 1 einerseits und dem Übersetzungsverhältnis des Differenzialgetriebes 3 und eines evtl. vorhandenen Anpassungsgetriebes 10 andererseits zwangsläufig einstellt. Anschließend wird der Differenzialantrieb 5 so geregelt, dass seine Drehzahl innerhalb seines Regeldrehzahlbereichs bleibt, während die Antriebsmaschine 4 mit oder ohne sogenannte Stern/Dreieck-Schaltung ans Netz 12 geschaltet wird. Die Drehzahlregelung bzw. Bremsung des Differenzialantriebes 5 erfolgt dabei vorzugsweise elektrisch durch den Wechselrichter 6a, 6b, oder mittels Motorbremse 13.

Die Motorbremse 13 kann auch dazu verwendet werden, den Differenzialantrieb 5 vor Überdrehzahlen zu schützen, wenn z. B. die Antriebsmaschine 4 ausfällt und die Arbeitsmaschine 1 anhält oder in die Gegenrichtung dreht.

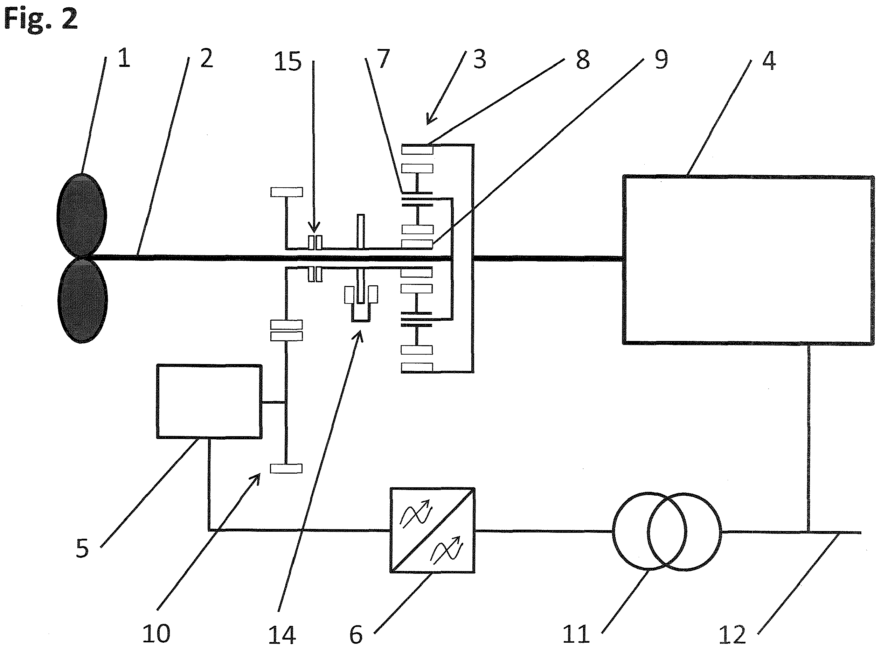

Fig. 2 zeigt eine weitere erfindungsgemäße Ausführungsform eines Differenzialsystems. Der gezeigte Triebstrang weist auch hier wie in Fig. 1 eine Arbeitsmaschine 1, eine Antriebswelle 2, ein Differenzialgetriebe 3, eine Antriebsmaschine 4 und eine Differenzialantrieb 5 auf, welcher mittels eines Frequenzumrichter 6 (bestehend aus motorseitigem und netzseitigen Wechselrichter - hier als Einheit vereinfacht dargestellt) und eines Transformators 11 an das Netz 12 angeschlossen ist. Auch hier wird der Differenzialantrieb 5 mittels eines Anpassungsgetriebes 10 an das Differenzialgetriebe 3 angebunden. Zusätzlich wird jedoch zwischen dem Anpassungsgetriebe 10 und dem Differenzialgetriebe 3 eine Kupplung 15 implementiert.

Eine Synchronisationsbremse 14 wirkt auf das Sonnenrad 9 und damit auf den gesamten Triebstrang. Beim Anfahren werden in dieser Ausführungsform der Erfindung in einem ersten Schritt der Differenzialantrieb 5 und das Anpassungsgetriebe 10 durch die Kupplung 15 vom Rest des Triebstranges entkoppelt. Wird nun die Antriebsmaschine 4 hochgefahren und mit dem Netz verbunden, so dreht das Sonnenrad 9 frei mit und es kann sich im gesamten Triebstrang kein nennenswertes Drehmoment aufbauen. Somit verbleibt auch in diesem Fall die Arbeitsmaschine 1 in einem Bereich kleiner Drehzahl und die Antriebsmaschine 4 kann ohne nennenswertes äußeres Gegenmoment mit dem Netz 12 synchronisiert werden.

Um den oben beschriebenen Effekt des hohen Anfahrstromes beim Synchronisieren der Antriebsmaschine 4 zu vermeiden, kann entweder eine Stern/Dreieck-Schaltung implementiert oder die Antriebsmaschine 4 durch eine Hilfseinrichtung - z.B. einen kleinen drehzahlvariablen Antrieb - auf (annähernd) Synchrondrehzahl gebracht und anschließend mit dem Netz 12 synchronisiert werden. Alternativ kann bei geschlossener Kupplung 15 - wie schon zu Fig. 1 beschrieben - die Antriebsmaschine 4 mit dem Differenzialantrieb 5 auf Drehzahl gebracht werden. Dabei kann die Antriebsmaschine 4 zwar nicht bis zu ihrer Synchrondrehzahl beschleunigt werden, zumindest ist jedoch der sich einstellende Anfahrstrom kleiner. Die Kupplung 15 wird dann wieder geöffnet.

Eine alternative Methode zur stoßfreien Netzsynchronisation der elektrischen Maschine 4 wäre in diesem Fall einerseits den Frequenzumrichter 6 vom Differenzialantrieb 5 und andererseits die elektrische Maschine 4 vom Netz 12 zu trennen. In weiterer Folge kann man die elektrische Maschine 4 mittels des Frequenzumrichters 6 mit dem Netz 12 synchronisieren, dann die elektrische Maschine 4 mit dem Netz 12 verbindenden und abschließend den Frequenzumrichter 6 (wieder) mit dem Differenzialantrieb 5 verbinden. Damit kann die elektrische Maschine 4 stoßfrei ans Netz 12 geschaltet werden. In diesem Fall würde der Differenzialantrieb 5 erst dann mit der drehzahlvariablen Regelung des Triebstranges beginnen, sobald die mit dem Sonnenrad 9 verbundene Antriebswelle des Differenzialgetriebes 3 im Regeldrehzahlbereich des Differenzialantriebs 5 liegt.

Sobald die Antriebsmaschine 4 über eine gewisse Drehzahl beschleunigt und die Arbeitsmaschine 1 sich währenddessen nur langsam dreht, stellt sich am Sonnenrad 9 eine entsprechend dem Übersetzungsverhältnis des Differenzialgetriebes 3 hohe Drehzahl ein, welche (unter Berücksichtigung des Anpassungsgetriebes 10) über dem erlaubten Regeldrehzahlbereich für den Differenzialantrieb 5 liegt. Der Regeldrehzahlbereich ist der Drehzahlbereich, in dem der Differenzialantrieb 5 arbeitet, um den Arbeitsdrehzahlbereich der Arbeitsmaschine 1 realisieren zu können. Der Regeldrehzahlbereich wird dabei vor allem durch die vom Hersteller spezifizierten Spannungs-, Strom- und Drehzahlgrenzen bestimmt. In dieser Phase ist der Differenzialantrieb 5 nicht mit dem Netz 12 verbunden. In einem weiteren Schritt wird daher mit der Synchronisationsbremse 14 der mit dem Sonnenrad 9 verbundene zweite Antrieb des Differenzialgetriebes 3 auf eine Drehzahl verzögert, welche im Regeldrehzahlbereich des Differenzialantriebs 5 liegt. Dies kann, abhängig vom realisierten Bremssystem bzw. den Anforderungen an den Triebstrang, sowohl Drehzahl/Drehmoment-geregelt als auch -ungeregelt erfolgen. In weiterer Folge wird der differenzialantriebseitige Teil der Kupplung 15 (vorzugsweise mittels Differenzialantrieb 5) vorzugsweise mit der Drehzahl des zweiten Antriebs des Differenzialgetriebes 3 synchronisiert und anschließend die Kupplung 15 geschlossen. Die Kupplung 15 ist vorzugsweise eine formschlüssige Klauenkupplung oder eine kraftschlüssige Lamellenkupplung. Ein Vorteil der kraftschlüssigen Lamellenkupplung ist, dass, wenn sie dafür ausgelegt ist, keine Synchronisation der beiden Kupplungshälften notwendig ist. Die Kupplung 15 kann entfallen, wenn der Differenzialantrieb 5 für die sich während des Anfahrprozesses einstellenden Drehzahlen ausgelegt ist. Damit kann in weiterer Folge die Motorbremse 13 die Synchronisationsbremse 14 ersetzen.

Um ein hohes Drehmoment, welches über dem Drehmoment des Differenzialantriebes 5 liegt, erzielen zu können, kann die Synchronisationsbremse 14 bzw. die Betriebsbremse 13 auch dafür vorgesehen werden, im generatorischen (Normal-)Betrieb des Differenzialsystems das Drehmoment im Triebstrang zu erhöhen - d.h. hier wirken Differenzialantrieb 5 und Synchronisationsbremse 14 bzw. die Betriebsbremse 13 in die gleiche Drehmomentrichtung, womit ein entsprechend hohes Gesamtdrehmoment im Triebstrang erreicht werden kann.

Durch Betätigung der Synchronisationsbremse 14 wird zwangsläufig die Antriebswelle 2 beschleunigt, wobei das dazu zur Verfügung stehende Drehmoment durch das Minimum aus der auf die Antriebswelle 2 wirkenden Bremskraft der Synchronisationsbremse 14 einerseits und dem Kippmoment der Antriebsmaschine 4 andererseits bestimmt wird. D.h. im Gegensatz zu den Anfahroptionen gemäß Stand der Technik kann hier das mehrfache Nenndrehmoment als Anfahrmoment von Drehzahl Null weg realisiert werden, da das typische Kippmoment einer Drehstrommaschine bei ca. 2 bis 3-fachem ihres Nenndrehmomentes liegt. Grundsätzlich kann diese Anfahrmethode auch bei z.B. Verbrennungskraftmaschinen eingesetzt werden, was mitunter erforderlich ist, weil diese im Teildrehzahlbereich nur ein Drehmoment erzeugen können, welches wesentlich geringer als ihr Nenndrehmoment ist.

Als Synchronisationsbremse 14 wird beispielweise eine Scheibenbremse (= mechanische Bremse) eingesetzt, womit diese auch als Betriebs- und Sicherheitsbremse für den Differenzialantrieb 5 dienen kann. Damit kann die Synchronisationsbremse 14 grundsätzlich auch die Funktion der in Fig. 1 dargestellten Motorbremse 13 erfüllen.

Alternativ kann jedoch jede Art von Bremse eingesetzt werden. Insbesondere bieten sich hier sogenannte Retarder an. Hier ist zunächst einmal die Gruppe der hydrodynamischen Retarder (= hydraulische Bremse) zu nennen. Hydrodynamische Retarder arbeiten meist mit Öl oder Wasser, das bei Bedarf in ein Wandlergehäuse geleitet wird. Das Wandlergehäuse besteht aus zwei rotationssymmetrischen und sich gegenüberliegenden Schaufelrädern, und zuvor einem Rotor, der mit dem Triebstrang der Anlage verbunden ist, und einem feststehenden Stator. Der Rotor beschleunigt das zugeführte Öl und die Zentrifugalkraft drückt es nach außen. Durch die Form der Rotorschaufeln wird das Öl in den Stator geleitet, der dadurch ein bremsendes Drehmoment im Rotor induziert und in weiterer Folge dann auch den gesamten Triebstrang bremst. Bei einem elektrodynamischen Retarder (= elektrische Bremse), z.B. einer Wirbelstrombremse, sind z.B. zwei Stahlscheiben (Rotoren), die nicht magnetisiert sind, mit dem Antriebsstrang verbunden. Dazwischen liegt der Stator mit elektrischen Spulen. Wenn durch Aktivierung des Retarders Strom eingesteuert wird, werden Magnetfelder erzeugt, die durch die Rotoren geschlossen werden. Die gegenläufigen Magnetfelder erzeugen dann die Bremswirkung. Die entstandene Wärme wird z.B. durch innenbelüftete Rotorscheiben wieder abgegeben.

Ein wesentlicher Vorteil eines Retarders als Betriebsbremse ist dessen Verschleißfreiheit und gute Regelbarkeit.

Das erfindungsgemäße System kann auch dazu verwendet werden, die Antriebsmaschine 4 im Phasenschiebebetrieb zu betreiben. D. h., dass die Antriebsmaschine 4 Blindstrom ins das bzw. aus dem Netz 12 liefern bzw. beziehen kann, ohne dass die Arbeitsmaschine 1 betrieben wird. Dies gilt insbesondere für Energiegewinnungsanlagen. Dabei wird die Antriebsmaschine 4 bloß mit dem Netz 12 verbunden, ohne die weiteren Schritte des beschriebenen Anfahrprozesses auszuführen. Dies erfolgt erst wenn die Arbeitsmaschine 1 den Betrieb aufzunehmen hat.

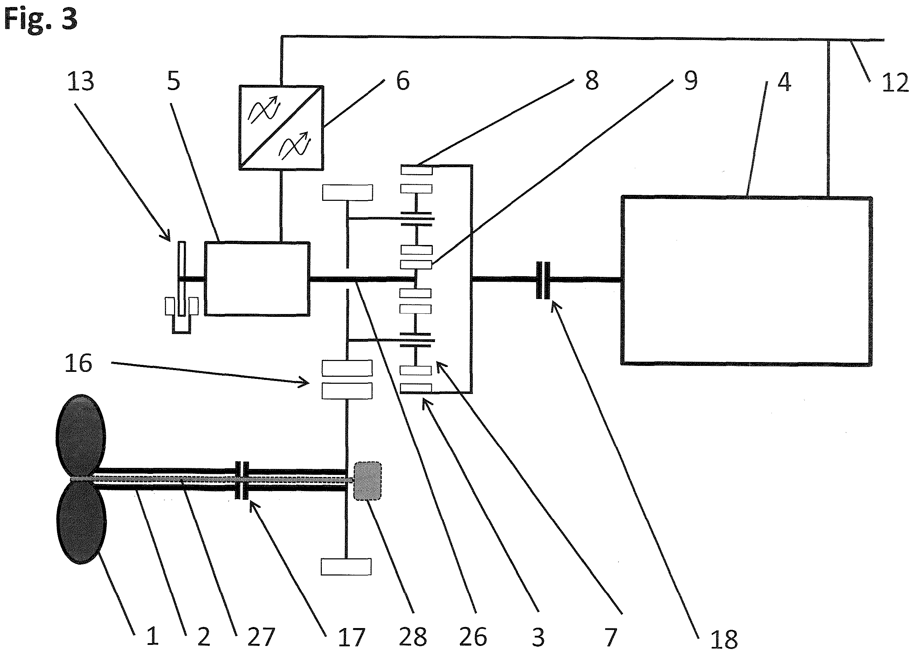

Fig. 3 zeigt eine weitere erfindungsgemäße Ausführungsform eines Differenzialsystems mit einer Getriebevorstufe 16. Durch diese Getriebevorstufe 16 kann der Drehzahlbereich für die Antriebswelle 2 bzw. für die Arbeitsmaschine 1 entsprechend dem Übersetzungsverhältnisses der Getriebevorstufe 16 angepasst werden. Der Einsatz einer Getriebevorstufe 16 ist dann notwendig bzw. von Vorteil, wenn das aufgrund der technischen Parameter einer z.B. kostengünstigen Antriebsmaschine 4 und eines effizienten Differenzialsystems resultierende Drehzahlniveau nicht dem geforderten Arbeitsdrehzahlbereich einer Arbeitsmaschine 1 entspricht. Ein sich dadurch ergebender Vorteil ist, dass, sofern die Getriebevorstufe 16 wie dargestellt eine Stirnradstufe ist, der Differenzialantrieb 5 ohne einem Anpassungsgetriebe 10 gemäß Fig. 1 und 2 koaxial zur Antriebsmaschine 4 auf der antriebsmaschinenabgewandten Seite des Differenzialgetriebes 3 positioniert werden kann.

Um ein durch den Wegfall des Anpassungsgetriebes 10 erforderliches höheres Übersetzungsverhältnis im Differenzialgetriebe 3 zu erreichen, bietet sich an, anstelle einfacher Planeten, sogenannte Stufenplaneten einzusetzen. Diese Stufenplaneten bestehen jeweils aus zwei drehfest verbunden Zahnrädern mit unterschiedlichem Durchmesser und vorzugsweise unterschiedlicher Verzahnungsgeometrie. Das Hohlrad 8 ist dann mit dem im Durchmesser kleineren Zahnrad des Stufenplaneten im Eingriff, und das Sonnenrad 9 mit dem zweiten Zahnrad des Stufenplaneten. Alternativ kann nun aber auch anstelle der in Fig. 1 dargestellten Stirnradstufe eine Planetengetriebestufe als Anpassungsgetriebe 10 realisiert werden. Sowohl die Synchronisationsbremse 14 als auch die Kupplung 15 können - abhängig von den gewünschten Drehzahl/Drehmomentverhältnissen - entweder vor oder hinter der Anpassungsstufe 10 positioniert sein.

Die Verbindungswelle 26 zwischen dem Differenzialgetriebe 3 und dem Differenzialantrieb 5 ist vorzugsweise eine elektrisch nicht leitende Faserverbundwelle. Ist die Verbindungswelle 26 eine elektrisch leitende Welle, dann ist vorzugsweise ein isolierendes Element zwischen dem Differenzialgetriebe 3 (bzw. falls vorhanden der Anpassungsgetriebe 10) und dem Differenzialantrieb 5 einzubauen, um unerwünschte elektrische Ströme vom Differenzialgetriebe 3 fernzuhalten.

Damit besteht das Differenzialsystem aus einer kleinstmöglichen Anzahl von Bauteilen und hat darüber hinaus einen optimalen Gesamtwirkungsgrad. Die Motorbremse 13 erfüllt in der gezeigten Konfiguration auch die Funktion der Synchronisationsbremse 14 aus Fig. 2. Nachteil dieser Ausführungsform im Vergleich zu der gemäß Fig. 2 ist, dass der Differenzialantrieb 5 für den erfindungsgemäßen Anfahrvorgang für eine höhere Drehzahl ausgelegt werden muss, wobei der Differenzialantrieb 5 bei Drehzahlen über dem Regeldrehzahlbereich vorzugsweise vom Netz getrennt ist. Damit müssen Drehzahlen außerhalb des Regeldrehzahlbereiches nur mechanisch ertragen werden. Erschwerend kommt hinzu, dass das Übersetzungsverhältnis des Differenzialgetriebes 3 höher sein muss als für die Lösung gemäß Fig. 2, weil hier das Anpassungsgetriebe 10 fehlt. Grundsätzlich ist jedoch auch für die Variante gem. Fig. 3 der zusätzliche Einsatz eines Anpassungsgetriebes 10 möglich, wodurch das Übersetzungsverhältnis des Differenzialgetriebes 3 kleiner werden kann. Darüber hinaus kann auch eine Kupplung 15 und eine Synchronisationsbremse 14 zwischen dem zweiten Antrieb des Differenzialgetriebes 3 bzw. Sonnenrad 9 und dem Differenzialantrieb 5 implementiert werden.

Grundsätzlich kann diese Ausführungsform auch für Energiegewinnungsanlagen, insbesondere Windkraftanlagen und Wasserkraftanlagen, als Arbeitsmaschine 1 eingesetzt werden. In diesem Fall dreht sich im Vergleich zu z.B. einer Pumpe als Arbeitsmaschine 1 die Leistungsflussrichtung um und die Antriebsmaschine 4 arbeitet als Generator. Zwischen der Getriebevorstufe 16 und der Arbeitsmaschine 1 können im Bedarfsfall eine oder mehrere weitere Getriebestufen vorgesehen werden, welche dann vorzugsweise als Planetengetriebestufe ausgeführt werden.

Ein weiterer Vorteil dieser Ausführungsform mit Getriebevorstufe 16 ist, dass auf einfache Weise eine koaxiale Hohlwelle 27 zur Arbeitsmaschine 1 realisiert werden kann. Mittels dieser Hohlwelle 27 kann die sich drehende Arbeitsmaschine 1 auf einfache Weise elektrisch oder hydraulisch versorgt werden. Dabei wird vorzugsweise eine Drehübertragung 28 zur an der arbeitsmaschinenabgewandten Seite der Getriebevorstufe appliziert. Prinzipiell kann auch ein mechanisches Gestänge in der Durchführung 27 geführt werden und damit durch translatorische oder drehende Bewegung z.B. die Schaufeln eines Pumpenrotors mechanisch verstellt werden.

Sind das Differenzialsystem und die Getriebevorstufe 16 als sogenannte "standalone"-Variante vorgesehen, so werden die Antriebswelle 2 und die Antriebsmaschine 4 vorzugsweise mittels einer Kupplung 17, 18 angeschlossen.

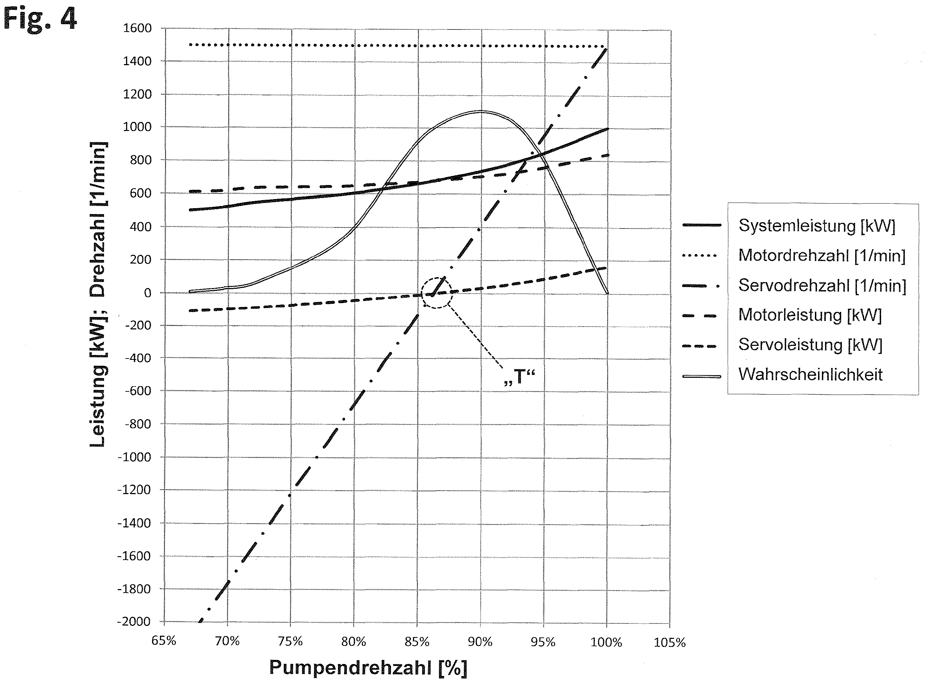

Fig. 4 zeigt die Drehzahl- und Leistungsparameter eines Differenzialsystems, beispielsweise für eine Pumpe. Die Darstellung zeigt Leistungs- und Drehzahlwerte für eine Pumpe als Arbeitsmaschine 1, eine Antriebsmaschine 4 und einen Differenzialantrieb 5 jeweils aufgetragen über den Drehzahlwerten der Antriebswelle 2 ("Pumpendrehzahl"). Die Antriebsmaschine 4 ist mit dem Netz 12 verbunden und damit ist ihre Drehzahl ("Motordrehzahl") konstant - in dem gezeigten Beispiel ca. 1.500 1/min für eine vierpolige Drehstrommaschine in einem 50 Hz-Netz. Der Arbeitsdrehzahlbereich für die Antriebswelle 2 geht von 68 % bis 100 %, wobei bei 100 % der gewählte Nenn- bzw. Maximalpunkt ist. Entsprechend dem Übersetzungsverhältnis des Differenzialsystems geht die Drehzahl des Differenzialantriebes 5 ("Servodrehzahl") von -2.000 1/min bis 1.500 1/min. Dies bedeutet, dass der Differenzialantrieb 5 generatorisch (-) und motorisch (+) betrieben wird. Da die maximal erforderliche Leistung des Differenzialantriebes 5 im generatorischen (-) Bereich (ca. 110kW) geringer als die im motorischen (+) Bereich (ca. 160kW) ist, kann der Differenzialantrieb 5 im generatorischen (-) Bereich im sogenannten Feldschwächebereich betrieben werden, womit für den Differenzialantrieb 5 eine höhere Drehzahl - jedoch mit reduziertem Drehmoment - realisierbar ist. Damit kann auf einfache Weise der Drehzahlbereich für die Arbeitsmaschine 1 erweitert werden.

Eine weitere Möglichkeit, den Drehzahlbereich für die Arbeitsmaschine 1 zu erweitern, bietet die sogenannte 87Hz-Kennlinie für den Betrieb des Frequenzumrichters 6. Das Prinzip ist dabei folgendes: Motoren kann man typischerweise in Stern (400V) oder Dreieck (230V) betreiben. Betreibt man einen Motor wie üblich mit 400V in Sternschaltung, dann erreicht man bei 50 Hz den Nennpunkt. Diese Kennlinie wird im Frequenzumrichter eingestellt. Man kann einen Motor aber auch mit 400V in Dreieckschaltung betreiben und den Frequenzumrichter so parametrieren, dass er bei 230V die 50Hz erreicht. Dadurch erreicht der Frequenzumrichter seine Nennspannung (400V) erst bei 87Hz (√3 x 50Hz). Da das Motordrehmoment bis zum Nennpunkt konstant ist, erreicht man mit der 87Hz-Kennlinie eine höhere Leistung. Zu beachten ist dabei jedoch, dass man im Vergleich zur Sternschaltung bei der Dreieckschaltung einen um √3 höheren Strom hat. D.h. der Frequenzumrichter muss stärker dimensioniert sein. Darüber hinaus entstehen im Motor durch die höhere Frequenz auch höhere Verluste, für die der Motor thermisch ausgelegt sein muss. Letztendlich erreicht man jedoch mit der 87Hz-Kennlinie einen entsprechend (√3) größeren Drehzahlbereich mit - im Gegensatz zur Feldschwächung - nicht reduziertem Drehmoment.

Der Punkt "T" in Fig. 4 markiert die sogenannte "Grunddrehzahl" der Antriebswelle 2, bei der die Drehzahl des Differenzialantriebes 5 gleich Null ist. Idealerweise wird dieser Punkt "T" in einen Arbeitsbereich gelegt, in dem die Anlage über große Zeitanteile betrieben wird. In diesem Betriebspunkt kann die Motorbremse 13 aktiviert werden, womit der Differenzialantrieb 5 nicht betrieben werden muss und in weiterer Folge damit zusammenhängende Verluste und Verschleiß vermieden werden. Im motorischen (+) Bereich des Kennfeldes wird der Antrieb parallel von der Antriebsmaschine 4 und dem Differenzialantrieb 5 angetrieben. Die Summe beider Leistungen ist die Antriebsleistung für die Antriebswelle 2 ("Systemleistung") - abzüglich anfallender Systemverluste. Im generatorischen (-) Bereich muss die Antriebsmaschine 4 die Leistung des Differenzialantriebes 5 ("Servoleistung") kompensieren, wodurch die Systemgesamtleistung ("Systemleistung") die Antriebsleistung der Antriebsmaschine 4 ("Motorleistung") abzüglich der Leistung des Differenzialantriebes 5 ist. D.h., dass wirkungsgradmäßig der motorische (+) Bereich besser ist. Dies passt sehr gut zur dargestellten beispielhaften Häufigkeitsverteilung ("Wahrscheinlichkeit") der Lastverteilung im Dauerbetrieb der Anlage, welche einen Großteil der Betriebsdauer im motorischen (+) Bereich zeigt. Betriebsbedingt ist jedoch auch ein Betrieb bei kleineren Pumpendrehzahlen erforderlich, wobei hier die anteilige Verweildauer mit abnehmender Pumpendrehzahl stark abnimmt.

Grundsätzlich ist festzustellen, dass je näher die Pumpendrehzahl ("Pumpendrehzahl") bei der Grunddrehzahl "T" liegt, desto kleiner ist der Leistungsfluss über den Differenzialantrieb 5 und somit ist auch der Systemgesamtwirkungsgrad sehr hoch. Da mit zunehmender Pumpendrehzahl auch die erforderliche Antriebsleistung steigt, kann jedoch im Vergleich zu einem Antrieb gemäß Stand der Technik durch den parallelen Antrieb der Antriebsmaschine 4 und des Differenzialantrieb 5 die erforderliche Größe der Antriebsmaschine 4 um die Größe des Differenzialantriebes 5 reduziert werden.

Wie schon eingangs erwähnt kann gemäß deutschem Gebrauchsmuster DE 20 2012 101 708 U mit Hilfe einer Differenzialsperre das Übersetzungsverhältnis des Differenzialantriebes auf 1 festgelegt werden. Damit ist es möglich, mit dem Differenzialantrieb 5 den kompletten Triebstrang auf die Synchrondrehzahl der Antriebsmaschine 4 zu beschleunigt und diese dann mit dem Netz zu synchronisieren. In weiterer Folge kann der Differenzialantrieb 5 wahlweise weggeschaltet werden und die Antriebsmaschine 4 treibt die Arbeitsmaschine 1 mit Synchrondrehzahl alleine an. Zusätzlich kann der Differenzialantrieb 5 die Arbeitsmaschine 1 parallel zur Antriebsmaschine 4 antreiben, womit eine höhere Triebstranggesamtleistung realisierbar ist. Mit der Differenzialsperre und der Motorbremse 13 kann man somit zwei stationäre Betriebspunkte des Triebstranges realisieren. In einer besonders kostengünstigen Ausführung wird der Differenzialantrieb so leistungsschwach ausgeführt, dass damit nur die Antriebsmaschine 4 mit dem Netz 12, bzw. die Differenzialsperre synchronisiert wird. Dies kann alternativ jedoch auch durch optionales Antreiben des Abtriebes bzw. des ersten Antriebs des Differenzialgetriebes 3 realisiert werden.

Soll die Antriebsmaschine 4 nur stoßfrei mit dem Netz zu synchronisieren werden, so kann diese mit einem kleinen Frequenzumrichter ans Netz synchronisiert werden. Anschließend wird der zweite Antrieb mittels Synchronisationsbremse 14 auf Drehzahl Null gebremst und somit die Arbeitsmaschine hochgefahren. Da in dieser einfachen Ausführung kein Differenzialantrieb 5 vorgesehen ist, lässt sich damit jedoch nur eine fixe Arbeitsdrehzahl realisieren.

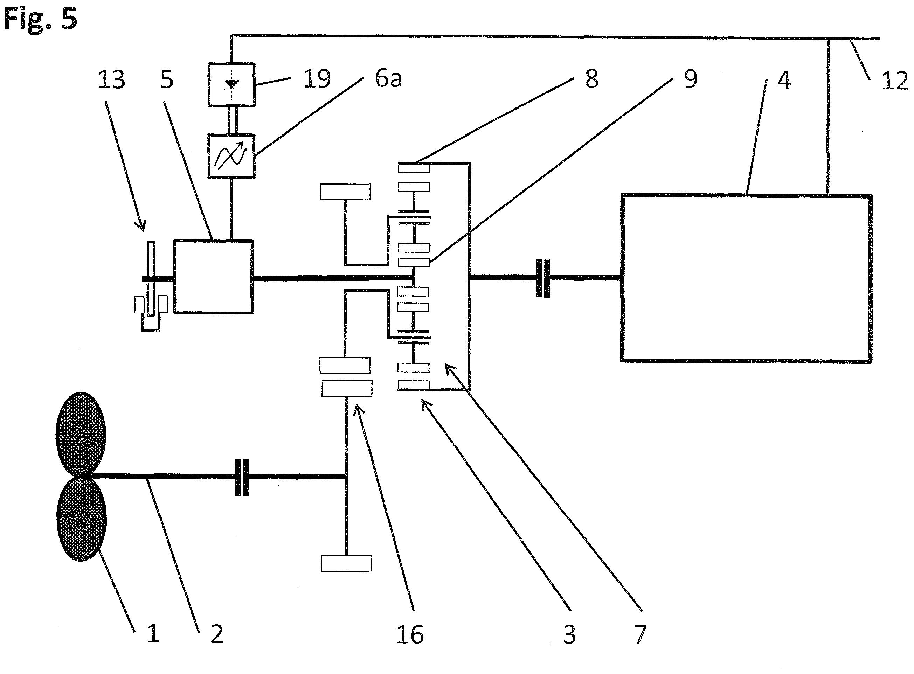

Fig. 5 zeigt eine weitere erfindungsgemäße Ausführungsform eines Differenzialsystems mit einem vereinfachten Differenzialantrieb. In dieser Ausführungsvariante wird der netzseitige Wechselrichter 6b durch einen einfachen Gleichrichter 19 ersetzt. Dieser hat einen meist höheren Wirkungsgrad als ein Wechselrichter 6b und ist auch wesentlich robuster und kostengünstiger. Einzige Einschränkung durch den Einsatz eines Gleichrichters 19 ist, dass der Differenzialantrieb 5 nur mehr motorisch (+) betrieben werden kann.

Wird im umgekehrten Fall das Differenzialsystem nur generatorisch (-) betrieben, so kann, unter Erhalt des netzseitigen Wechselrichters 6b, der motorseitige Wechselrichter 6a durch einen Gleichrichter 19 ersetzt werden.

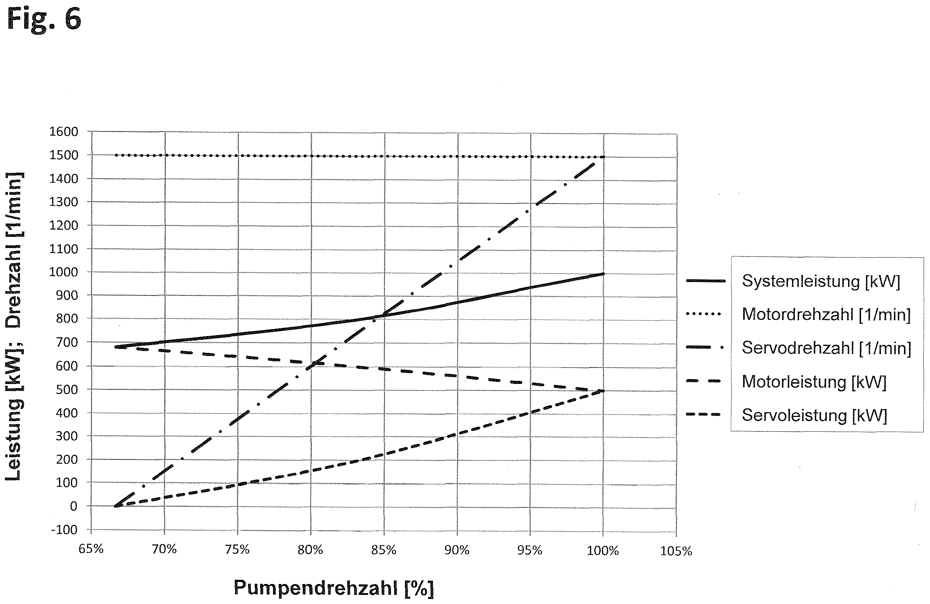

Fig. 6 zeigt die sich aus Fig. 5 ergebenden Drehzahl- und Leistungsparameter bei gleichem Arbeitsdrehzahlbereich für die Antriebswelle 2 wie in Fig. 4 (68%-100%). Aufgrund der Tatsache, dass der Differenzialantrieb 5 nur mehr im motorischen (+) Bereich betrieben wird, ist der maximale Leistungsfluss über den Differenzialantrieb 5 wesentlich größer als im davor gezeigten Beispiel. Im Nennpunkt erreicht die erforderliche Leistung des Differenzialantriebes 5 ("Servoleistung") rd. 500kW, das ist 50 % der Gesamtantriebsleistung ("Systemleistung"). Dies hat zur Folge, dass auch der Frequenzumrichter 6a, 19 entsprechend groß dimensioniert werden muss. Vorteil dieser Variante ist, dass das Übersetzungsverhältnis des Differenzialgetriebes 3 wesentlich geringer als für die Variante gemäß Fig. 3 sein kann, und somit beim erfindungsgemäßen Anfahren des Systems die dabei maximal erreichbare Drehzahl des Differenzialantriebes 5 geringer ist.

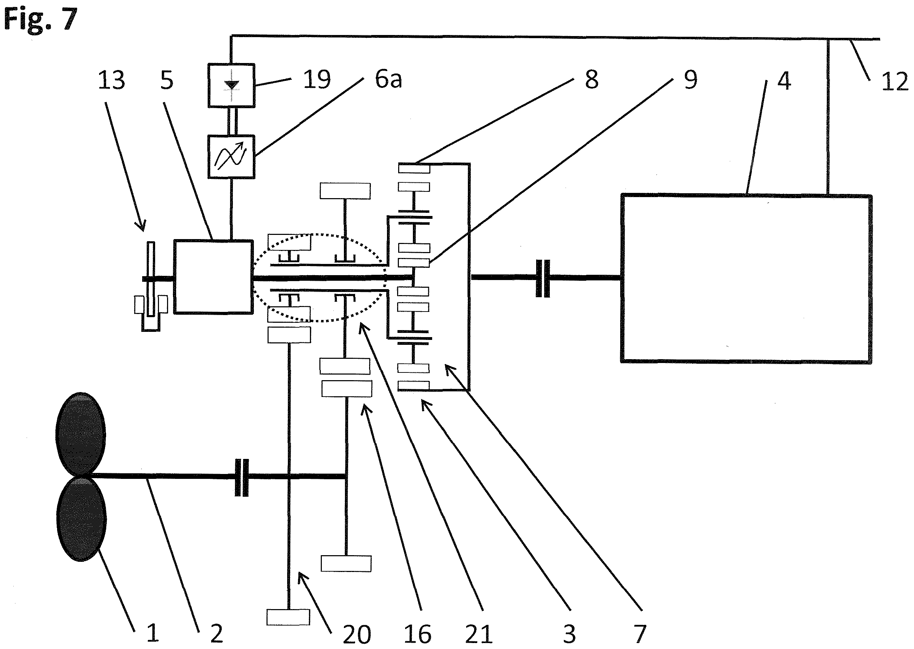

Fig. 7 zeigt eine weitere erfindungsgemäße Ausführungsform eines Differenzialsystems mit einer Getriebeschaltstufe. In dem gezeigten Ausführungsbeispiel wird die Getriebevorstufe 16 um eine weitere Getriebevorstufe 20, mit einem zur Getriebevorstufe 16 verschiedenen Übersetzungsverhältnis, erweitert. Mittels Schaltvorrichtung 21 kann man zwischen den beiden Getriebevorstufen wählen und erhält damit ein Verstellgetriebe 16, 20, 21, welches zwei Drehzahlbereiche für die Antriebswelle 2 realisieren kann. Alternativ können auch mehrere Schaltstufen implementiert werden.

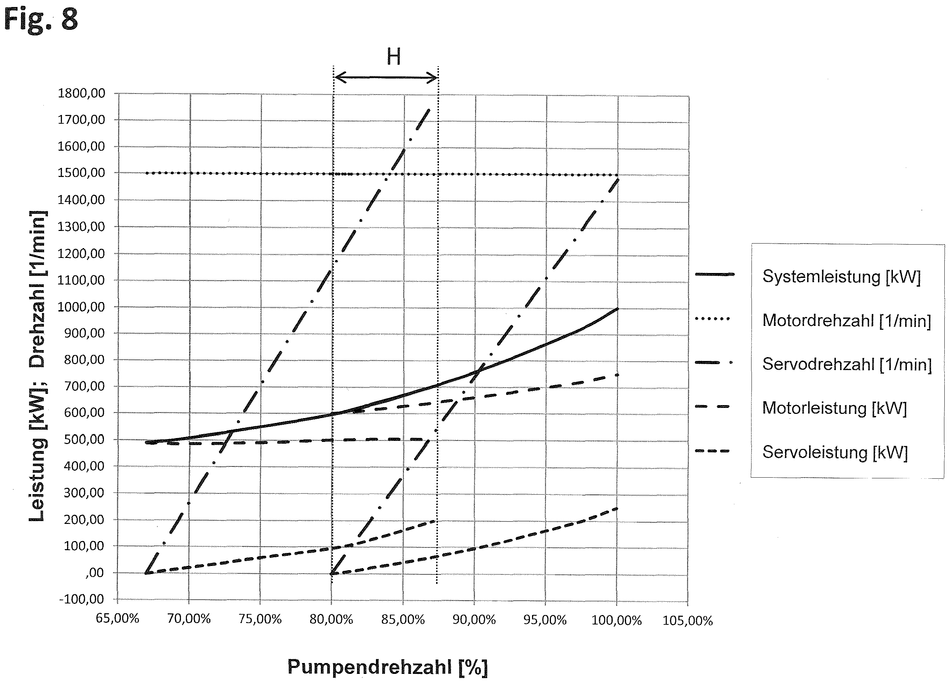

Fig. 8 zeigt die sich aus Fig. 7 ergebenden Drehzahl- und Leistungsparameter. Grundsätzlich enthält die Darstellung zwei Kennfelder - jedes davon ähnlich wie in Fig. 6, jedoch mit jeweils kleinerem Arbeitsdrehzahlbereich für die Arbeitsmaschine 1. Durch das zweistufige Verstellgetriebe 16, 20, 21 sind diese Kennfelder zueinander versetzt, womit bei gleichem Gesamt-Arbeitsdrehzahlbereich für die Pumpe ("Pumpendrehzahl" 68%-100%) eine mit Fig. 6 vergleichbar kleinere Baugröße für den Differenzialantrieb 5 erforderlich ist. Darüber hinaus kann man im Kennfeld mit kleinerer Systemleistung den Differenzialantrieb 5 im Feldschwächebereich betreiben, da hier das für das Differenzialsystem erforderliche Drehmoment grundsätzlich kleiner als dessen Nenndrehmoment ist. Somit ist der Arbeitsdrehzahlbereich im Kennfeld mit der kleineren Systemleistung größer als der für das zweite Kennfeld. Die beiden Kennfelder überlappen sich vorzugsweise im Hysteresebereich "H", um ein häufiges Umschalten zwischen den Kennfeldern zu vermeiden. Der Hysteresebereich "H" geht jedoch zu Lasten eines leistungsmäßig noch kleineren Differenzialsystems und kann, wenn keine Überlappung der beiden Kennfelder erforderlich ist, auch kleiner sein bzw. überhaupt wegfallen.

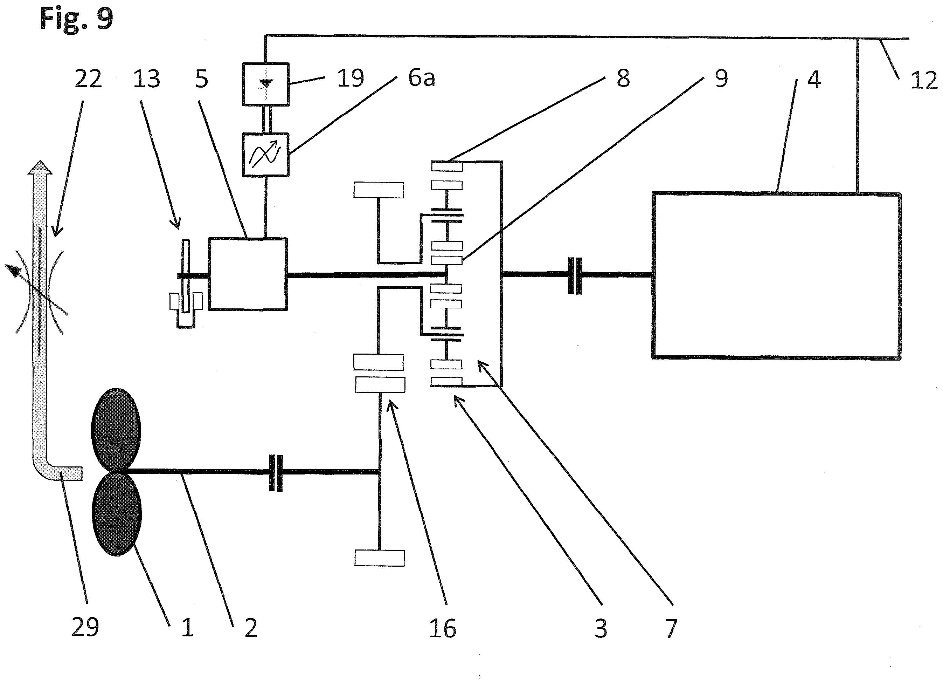

Fig. 9 zeigt eine weitere erfindungsgemäße Ausführungsform eines Differenzialsystems mit reduziertem Drehzahlbereich. Grundsätzlich ist der Triebstrang gleich aufgebaut wie bereits in Fig. 5 dargestellt. Im Leitungssystem 29 der Arbeitsmaschine 1 (z.B. einer Pumpe, eines Kompressors oder eines Ventilators) ist nach dieser eine Drossel 22 integriert. Damit kann die von der Arbeitsmaschine 1 geförderte Menge gedrosselt werden, ohne dafür die Drehzahl der Arbeitsmaschine 1 zu reduzieren. Diese Drossel 22 wird üblicherweise bei nicht drehzahlvariablen Antrieben eingesetzt, um die geförderte Menge zu regeln/steuern. Die Drossel 22 kann verschiedenste Ausführungsformen haben, wobei eine einfache Klappe eine übliche Variante darstellt.

Grundsätzlich ist auch für die Variante gem. Fig. 9 der zusätzliche Einsatz eines Anpassungsgetriebes 10 möglich. Darüber hinaus kann auch eine Kupplung 15 und eine Synchronisationsbremse 14 zwischen dem zweiten Antrieb bzw. dem Sonnenrad 9 und dem Differenzialantrieb 5 implementiert werden. Weiters ist die Getriebevorstufe 16 auch nicht zwingend notwendig.

Um die Größe des Differenzialantriebes 5 bzw. des Frequenzumrichters 6a, 19 möglichst klein zu gestalten, kann anstelle des Gleichrichters 19 auch ein Netzwechselrichter 6b eingesetzt und damit das System motorisch (+) und generatorisch (-) betrieben werden, wodurch sich die Größe des Differenzialantriebes 5 entscheidend reduziert. Damit rückt die Grunddrehzahl (Punkt "T") in die Mitte des Arbeitsdrehzahlbereiches, in dem der Differenzialantrieb 5 eingebremst und damit das Differenzialsystem besonders effizient betrieben werden kann. Kleine bzw. betriebsbedingt erforderliche Fördermengenvariationen (wie z.B. bei Pumpen) können dabei mit der Drossel 22 kompensiert/geregelt werden.

Eine Möglichkeit den Arbeitsdrehzahlbereich für die Arbeitsmaschine 1 zu erweitern bieten, wie schon zu Fig. 4 beschrieben, der Feldschwächebereich bzw. die sogenannte 87Hz-Kennlinie für den Betrieb des Differenzialantriebes 5 und des Frequenzumrichters 6a, 6b oder 19.

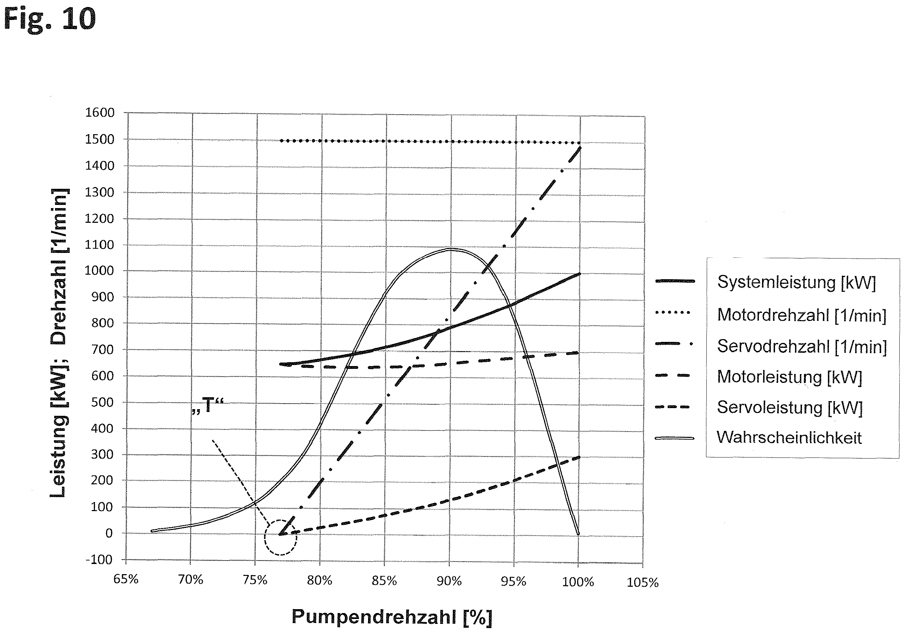

Fig. 10 zeigt die sich aus Fig. 9 ergebenden Drehzahl- und Leistungsparameter. Der gewählte Betriebsbereich des Differenzialsystems rückt damit in einen Bereich mit einer hohen Betriebs-Häufigkeitsverteilung ("Wahrscheinlichkeit"). Sobald der Differenzialantrieb 5 bei abnehmender Pumpendrehzahl die Grunddrehzahl (Punkt "T") erreicht, wird dieser vorzugsweise eingebremst bzw. angehalten. Eine betriebstechnisch notwendige geringere Fördermenge wird durch Aktivierung (Regelung/Steuerung) der Drossel 22 realisiert. Dabei bleiben die Drehzahlen des Differenzialsystems im Wesentlichen konstant.

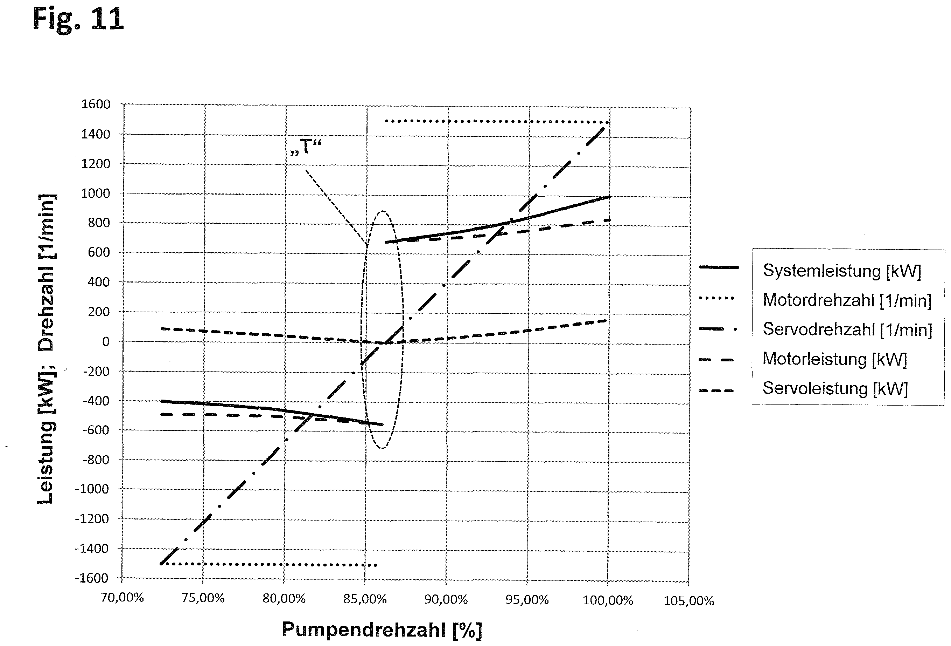

Fig. 11 zeigt die sich aus Fig. 9 (eine Drossel 22 kann dabei entfallen) ergebenden möglichen Drehzahl- und Leistungsparameter für eine sogenannte Pumpturbine. In diesem Anwendungsfall wird das System vorzugsweise oberhalb der Grunddrehzahl (Punkt "T") motorisch (+) und unterhalb der Grunddrehzahl generatorisch (-) betrieben. Dabei arbeitet im generatorischen Betrieb die Antriebsmaschine 4 als ein an das Netz 12 angeschlossener Generator. Durch die Leistungsflussumkehr bleibt der Differenzialantrieb (5) bei einer Arbeitsmaschinendrehzahl unterhalb der Grunddrehzahl motorisch (+). Dadurch erhält man ein elektrisch einfaches System, welches ohne netzseitigen Wechselrichter realisierbar ist. Da jedoch unterhalb der Grunddrehzahl die Leistungsflüsse von Generator (4) und Differenzialantrieb (5) gegensinnig sind und damit der Systemwirkungsgrad schlechter als im rein motorischen Betrieb ist, kann - sofern betriebstechnisch möglich - in dieser Betriebsart zur Gänze oder teilweise mit einer fixen Drehzahl, d.h. vorzugsweise mit angehaltenem Differenzialantrieb 5, gearbeitet werden. Idealerweise werden dann die Betriebspunkte so gelegt, dass die Pumpturbine bei Grunddrehzahl ("T") einen optimalen Wirkungsgrad für den Turbinen-Betriebsmodus hat.

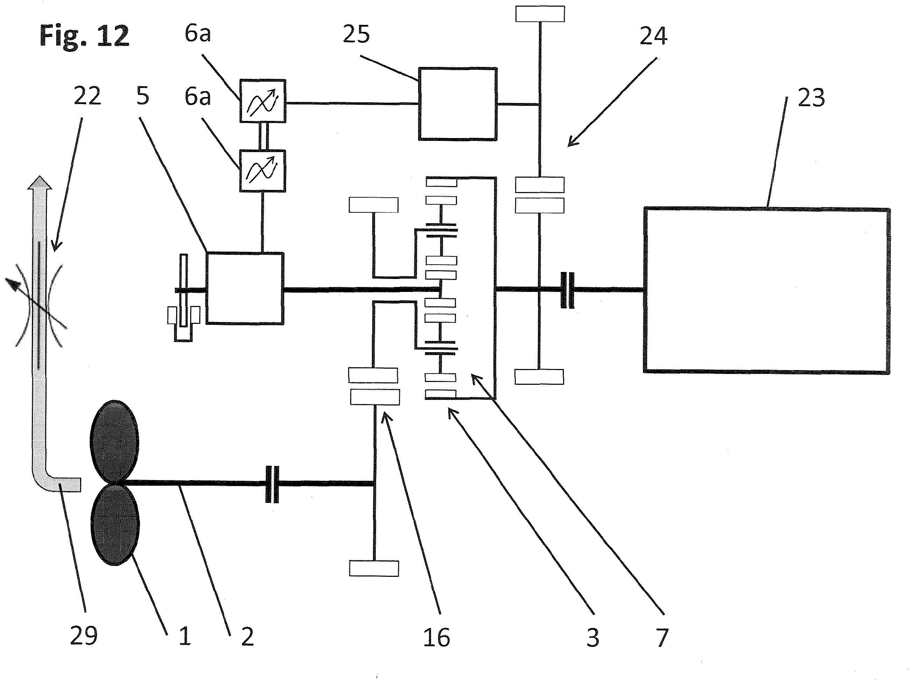

Fig. 12 zeigt eine weitere erfindungsgemäße Ausführungsform eines Differenzialsystems für eine Verbrennungskraftmaschine 23 als Antriebsmaschine. Da die Verbrennungskraftmaschine 23 nicht an ein elektrisches Netz angeschlossen ist, wird die erforderliche Energie für den Differenzialantrieb 5 dem ersten Antrieb des Differenzialgetriebes 3 entnommen, bzw. diesem zugeführt. Dabei werden zwei motorseitige Wechselrichter 6a mittels Gleichstromzwischenkreis verbunden, und treiben einen weiteren Differenzialantrieb 25 an. Dieser ist mittels Anpassungsgetriebe 24 mit dem ersten Antrieb des Differenzialgetriebes 3 verbunden. Das einstufig dargestellte Anpassungsgetriebe 24 kann bei Bedarf auch mehrstufig sein. Damit ist der Energiekreislauf geschlossen und das System kann quasi netzunabhängig sowohl generatorisch (-) als auch motorisch (+) betrieben werden. Passen die Auslegungsdrehzahlen von Verbrennungskraftmaschine 23 und Differenzialantrieb 25 gut zusammen, kann die Anpassungsgetriebe 24 entfallen und der Differenzialantrieb 25 wird direkt (mittels Kupplung) an die Verbrennungskraftmaschine 23 gekoppelt.

Idealerweise wird der elektrische Teil des Differenzialsystems, bestehend aus Differenzialantriebe 5 und 25 und den beiden Wechselrichtern 6a, auch mit einem Netz verbunden. Damit können beispielsweise die zu Fig. 1 bis 3 beschriebenen Anfahrszenarien einfach realisiert werden und/oder (wie z.B. bei Schiffsantrieben üblich) ein Stromnetz versorgt werden. Darüber hinaus ist auch die Integration einer Schaltstufe gemäß Fig. 7 möglich.

Anstelle der Differenzialantriebe 5 und 25 und den beiden Wechselrichtern 6a kann auch ein hydrostatisches Stellgetriebe eingesetzt werden. Dabei werden die Differenzialantriebe 5 und 25 durch eine hydrostatische Pumpe/Motor-Kombination ersetzt, welche mit einer Druckleitung verbunden und welche beide vorzugsweise im Durchflussvolumen verstellbar sind. Damit sind wie im Falle eines drehzahlvariablen elektrischen Differenzialantriebes die Drehzahlen regelbar. Dies gilt auch für Anwendungen mit einer elektrischen Maschine als Antriebsmaschine (4).

Die für den Betrieb einer Verbrennungskraftmaschine 23 in Kombination mit einem Differenzialsystem entstehenden wesentlichen Vorteile sind einerseits das erfindungsgemäß realisierbare hohe Anfahrmoment und dass die Verbrennungskraftmaschine in einem wirkungsgradoptimalem Bereich gefahren werden kann, sobald das Differenzialsystem die Drehzahlanpassung für die Arbeitsmaschine 1 übernimmt. Dadurch, dass eine Verbrennungskraftmaschine im Gegensatz zu einer netzgekoppelten Drehstrommaschine drehzahlvariabel betrieben werden kann, ergibt sich eine große Bandbreite von Möglichkeiten die System-Kennfelder zu erweitern/variieren.

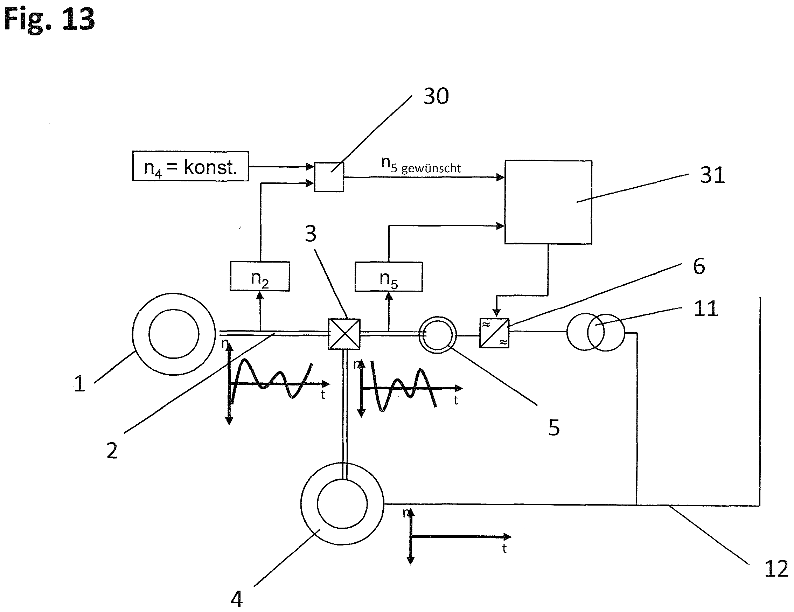

In Fig. 13 ist ein Regelsystem zum Dämpfen von Triebstrangschwingungen dargestellt. Das Drehmoment am Differenzialantrieb 5 ist proportional zum Drehmoment im gesamten Triebstrang, wodurch eine Drehmomentregelung/-steuerung bzw. auch eine Triebstrangdämpfung durch den Differenzialantrieb 5 möglich wird. Unter Triebstrangdämpfung versteht man hierbei das gezielte Ausregeln von meist rotatorischen Triebstrangschwingungen (Arbeitsmaschiene 1, Antriebswelle 2, Differenzialgetriebe 3, Antriebsmaschine 4 und Differenzialantrieb 5), die konstant oder transient auftreten können und zu unerwünschten Belastungen im gesamten oder in Teilen des Triebstranges führen. Erreicht wird das durch eine Modulation des Drehmomentes und/oder der Drehzahl des Differenzialantriebes 5 mit Schwingungen gleicher Frequenz.

Derartige, unerwünschte Triebstrangschwingungen oder transiente Triebstrangbelastungen können entweder durch von außen einwirkende Lasten auf die Arbeitsmaschine 1, in der Antriebswelle 2, dem Differenzialgetriebe 3 und dem Differenzialantrieb 5 selbst oder durch die Antriebsmaschine 4 entstehen und werden typischerweise im Drehzahl- bzw. Drehmomentverhalten des Triebstranges sichtbar.

Vorzugsweise können diese durch Drehzahl- und/oder Schwingungsmessungen im Triebstrang oder durch Strommessungen an der Antriebsmaschine 4 und/oder am Differenzialantrieb 5 erfasst werden. Eine direkte Erfassung von Drehmomenten ist ebenfalls möglich, jedoch meist nur aufwändig realisierbar. Die Art der Erfassung hängt aber letztlich immer davon ab, an welcher Stelle im Triebstrang die Dämpfung geschehen soll und ob Kopplungen ausgenutzt werden können.

Werden Triebstrangschwingungen z.B. durch ein typisches Betriebsverhalten an der Arbeitsmaschine 1 verursacht, und sollen sie in ihrer Wirkung an der Antriebsmaschine 4 kompensiert werden, so können diese durch Einprägen gegenphasiger Drehmoment-Schwingungen am Differenzialantrieb 5 verringert oder ausgelöscht werden. Dies ist z.B. bei Kompressoren der Fall, bei denen es bei einer Umdrehung der Kolbenstange zu bauartspezifischen Schwingungsanregungen kommt, welche stark mit der Kolbenstellung korrelieren. Da die jeweilige Schwingungsanregung immer bei derselben Kolbenstellung auftritt, genügt es, die Umfangsposition bzw. Drehstellung z.B. durch Messung zu kennen, um diese kompensieren zu können. Die Kenntnis dieser Schwingungsanregung erlaubt die selektive Kompensation einzelner oder mehrerer Schwingungen gleichzeitig. Vorzugsweise wird dies durch Positionserfassung der Kolbenstange erreicht oder durch eine der oben angeführten Methoden. Die notwendige synchrone und gegenphasige Drehmoment/Drehzahlanpassung wird durch übliche Methoden der Signalverarbeitung vorzugsweise mit Oszillatoren und Notch-Filter-Algorithmen realisiert, welche die gemessene Schwingungsanregung mit den richtigen Frequenzen nachbilden und auswerten. Eingebunden in ein gegengekoppeltes System stellen sich dadurch die notwendigen Amplituden und Phasenlagen für die zur Kompensation erzeugten Schwingungen automatisch ein, mit welchen dann das Stellglied am Differenzialantrieb 5 angesteuert wird.

Wie in Fig. 13 beispielhaft dargestellt ist, werden einer Vergleichsschaltung 30 eine zu erzielende konstante Drehzahl n₄ der Antriebsmaschine einerseits und die Drehzahl n₂ der Antriebswelle 2 zugeführt. Eine Regeleinrichtung 31 steuert anhand der daraus ermittelten gewünschten Drehzahl n_{5gewünscht} und der tatsächlichen Drehzahl n₅ der Eingangswelle des Differenzialantriebs 5 über den Frequenzumrichter 6 den Differenzialantrieb 5 derart, dass Schwingungen der Antriebsmaschine 4 so gut wie möglich bzw. gewünscht gedämpft werden. Die mit Bezug auf Fig. 13 beschriebene Triebstrangdämpfung kann auch unabhängig von allen anderen vorstehend beschriebenen Ausführungsformen eingesetzt werden.

## Patentansprüche

1. Verfahren zum Anfahren eines Triebstranges mit einer Antriebswelle (2), einer Antriebsmaschine (4) und mit einem Differenzialgetriebe (3) mit drei An- bzw. Abtrieben, wobei ein Abtrieb mit der Antriebswelle (2), ein erster Antrieb mit der Antriebsmaschine (4) und ein zweiter Antrieb mit einem Differenzialantrieb (5) verbunden ist, wobei die Antriebsmaschine (4) von einer Drehzahl von Null oder annähernd Null angefahren wird, während auf die Antriebswelle (2) ein äußeres bremsendes Drehmoment wirkt, und wobei in einer Beschleunigungsphase der Antriebswelle (2) der zweite Antrieb gebremst wird, **dadurch gekennzeichnet, dass**, sobald die Antriebsmaschine (4) eine Betriebsdrehzahl erreicht hat, der zweite Antrieb gebremst wird, bis die Drehzahl des zweiten Antriebs eine Drehzahl erreicht hat, bei der die Drehzahl des Differenzialantriebs (5) in ihrem Regeldrehzahlbereich liegt.

2. Verfahren nach Anspruch 1, **dadurch gekennzeichnet, dass** der zweite Antrieb vom Differenzialantrieb (5) zunächst entkoppelt ist und nach Erreichen einer Drehzahl, bei der die Drehzahl des Differenzialantriebs (5) in ihrem Regeldrehzahlbereich liegt, mit dem Differenzialantrieb (5) gekoppelt wird.

3. Verfahren nach Anspruch 1, **dadurch gekennzeichnet, dass** in einer Beschleunigungsphase der Antriebswelle (2) der zweite Antrieb gebremst wird, damit die Drehzahl des Differenzialantriebs (5) in seinem Regeldrehzahlbereich bleibt.

4. Verfahren nach Anspruch 3, **dadurch gekennzeichnet, dass** die Bremsleistung vom Differenzialantrieb (5) erzeugt wird.

5. Verfahren nach einem der Ansprüche 1, 3 oder 4, **dadurch gekennzeichnet, dass** die Bremsleistung von einer mit dem Differenzialantrieb (5) verbundenen mechanischen, elektrischen oder hydraulischen Bremse (13, 14) erzeugt wird.

6. Verfahren nach einem der Ansprüche 1 bis 4, **dadurch gekennzeichnet, dass** der zweite Antrieb direkt mechanisch, elektrisch oder hydraulisch gebremst wird.

7. Verfahren nach einem der Ansprüche 1 bis 6, **dadurch gekennzeichnet, dass** die Antriebsmaschine (4) eine mit einem Stromnetz (12) verbundene elektrische Maschine ist, die zuerst mit einer zusätzlichen Einrichtung auf zumindest annährend Synchrondrehzahl gebracht und dann mit dem Stromnetz (12) synchronisiert wird.

8. Verfahren nach einem der Ansprüche 1 bis 6, **dadurch gekennzeichnet, dass** die Antriebsmaschine (4) mit dem Differenzialantrieb (5) beschleunigt wird.

9. Verfahren nach Anspruch 8, **dadurch gekennzeichnet, dass** die Antriebsmaschine (4) eine mit einem Stromnetz (12) verbundene elektrische Maschine ist und nach dem Beschleunigen mit dem Stromnetz (12) verbunden wird.

10. Verfahren nach einem der Ansprüche 1 bis 6, **dadurch gekennzeichnet, dass** die Antriebsmaschine (4) eine mit einem Stromnetz (12) verbundene elektrische Maschine ist, die mittels eines Frequenzumrichters (6) des Differenzialantriebs (5) beschleunigt und mit dem Stromnetz (12) synchronisiert wird, dass dann die elektrische Maschine (4) mit dem Stromnetz (12) verbunden wird und dass abschließend die Antriebsmaschine (4) vom Frequenzumrichters (6) getrennt und dieser wieder mit dem Differenzialantrieb (5) verbunden wird.

## Claims

1. Method for starting a drive train with a drive shaft (2), a drive motor (4) and with a differential gear (3) with three drives or outputs, wherein one output is connected to the drive shaft (2), a first drive is connected to the drive motor (4) and a second drive is connected to a differential drive (5), wherein the drive motor (4) is started up from a speed of zero or approximately zero, while an external braking torque acts on the drive shaft (2), and wherein in an acceleration phase of the drive shaft (2) the second drive is braked, **characterized in that** as soon as the drive motor (4) has reached an operating speed, the second drive is braked until the speed of the second drive has reached a speed at which the speed of the differential drive (5) lies within its governed speed range.

2. Method according to claim 1, **characterized in that** the second drive is initially decoupled from the differential drive (5) and is coupled to the differential drive (5) after reaching a speed at which the speed of the differential drive (5) lies in its governed speed range.

3. Method according to claim 1, **characterized in that** in an acceleration phase of the drive shaft (2) the second drive is braked so that the speed of the differential drive (5) remains in its governed speed range.

4. Method according to claim 3, **characterized in that** the braking power is generated by the differential drive (5).

5. Method according to one of claims 1, 3 or 4, **characterized in that** the braking power is generated by a mechanical, electrical or hydraulic brake (13, 14) connected to the differential drive (5).

6. Method according to one of claims 1 to 4, **characterized in that** the second drive is braked directly mechanically, electrically or hydraulically.

7. Method according to one of claims 1 to 6, **characterized in that** the drive motor (4) is an electric machine connected to a power grid (12), which is first brought to at least approximately synchronous speed by means of an additional device and then synchronized with the power grid (12).

8. Method according to one of claims 1 to 6, **characterized in that** the drive motor (4) is accelerated with the differential drive (5).

9. Method according to claim 8, **characterized in that** the drive motor (4) is an electric machine connected to a power grid (12) and is connected to the power grid (12) after acceleration.

10. Method according to one of claims 1 to 6, **characterized in that** the drive motor (4) is an electric machine connected to a power grid (12), which is accelerated by means of a frequency converter (6) of the differential drive (5) and synchronized with the power grid (12), **in that** the electric machine (4) is then connected to the power grid (12), and **in that** finally the drive motor (4) is disconnected from the frequency converter (6) and the latter is connected to the differential drive (5) again.

## Revendications

1. Procédé de démarrage d'une chaîne cinématique comportant un arbre d'entraînement (2), une machine motrice (4) et un différentiel (3) à trois entrées ou sorties, dans lequel une sortie est reliée à l'arbre d'entraînement (2), une première entrée à la machine motrice (4) et une deuxième entrée à un entraînement de différentiel (5), dans lequel la machine motrice (4) est démarrée à partir d'une vitesse nulle ou approximativement nulle, tandis qu'un couple de freinage extérieur agit sur l'arbre d'entraînement (2), et dans lequel, dans une phase d'accélération de l'arbre d'entraînement (2), la deuxième entrée est freinée, **caractérisé en ce que**, dès que la machine motrice (4) a atteint une vitesse de fonctionnement, la deuxième entrée est freinée jusqu'à ce que la vitesse de la deuxième entrée ait atteint une vitesse à laquelle la vitesse de l'entraînement de différentiel (5) se trouve dans sa plage de vitesse de régulation.

2. Procédé selon la revendication 1, **caractérisé en ce que** la deuxième entrée est d'abord découplée de l'entraînement de différentiel (5) et est couplée à l'entraînement de différentiel (5) après avoir atteint une vitesse à laquelle la vitesse de l'entraînement de différentiel (5) se trouve dans sa plage de vitesse de régulation.

3. Procédé selon la revendication 1, **caractérisé en ce que**, dans une phase d'accélération de l'arbre d'entraînement (2), la deuxième entrée est freinée de telle sorte que la vitesse de l'entraînement de différentiel (5) reste dans sa plage de vitesse de régulation.

4. Procédé selon la revendication 3, **caractérisé en ce que** la puissance de freinage est générée par l'entraînement de différentiel (5).

5. Procédé selon l'une des revendications 1, 3 ou 4, **caractérisé en ce que** la puissance de freinage est générée par un frein mécanique, électrique ou hydraulique (13, 14) relié à l'entraînement de différentiel (5).

6. Procédé selon l'une des revendications 1 à 4, **caractérisé en ce que** la deuxième entrée est freinée directement de manière mécanique, électrique ou hydraulique.

7. Procédé selon l'une des revendications 1 à 6, **caractérisé en ce que** la machine motrice (4) est une machine électrique reliée à un réseau électrique (12), qui est d'abord amenée à une vitesse au moins approximativement synchrone au moyen d'un dispositif supplémentaire et est ensuite synchronisée avec le réseau électrique (12).

8. Procédé selon l'une des revendications 1 à 6, **caractérisé en ce que** la machine motrice (4) est accélérée avec l'entraînement de différentiel (5).

9. Procédé selon la revendication 8, **caractérisé en ce que** la machine motrice (4) est une machine électrique reliée à un réseau électrique (12) et est reliée au réseau électrique (12) après l'accélération.

10. Procédé selon l'une des revendications 1 à 6, **caractérisé en ce que** la machine motrice (4) est une machine électrique reliée à un réseau électrique (12), qui est accélérée et synchronisée avec le réseau électrique (12) au moyen d'un variateur de fréquence (6) de l'entraînement de différentiel (5), que la machine électrique (4) est ensuite reliée au réseau électrique (12) et qu'enfin la machine motrice (4) est séparée du variateur de fréquence (6) et ce dernier à nouveau relié à l'entraînement de différentiel (5).
